# EUROPÄISCHE PATENTSCHRIFT

(11) **EP 1 332 659 B1**
(45) Veröffentlichungstag und Bekanntmachung des Hinweises auf die Patenterteilung: **06.04.2011**
(21) Anmeldenummer: 03001062.3
(22) Anmeldetag: 18.01.2003
(51) Int. Cl.: A01B 69/00, A01D 41/127

(54) **Ortungssystem an selbstfahrenden landwirtschaftlichen Arbeitsmaschinen**
Automotive agricultural working vehicle localizing system
Système de localisation pour véhicule de travail agricole automoteur

(30) Priorität: 05.02.2002 DE 10204702
(43) Veröffentlichungstag der Anmeldung: 06.08.2003
(73) Patentinhaber: CLAAS Selbstfahrende Erntemaschinen GmbH, 33428 Harsewinkel (DE)
(72) Erfinder: Diekhans, Norbert, Dr., 33335 Gütersloh (DE)

(56) Entgegenhaltungen:
- EP-A- 0 878 121
- EP-A- 1 002 455
- EP-A- 1 219 153
- DD-A- 155 157
- US-B1- 6 216 071

## Beschreibung

Die Erfindung bezieht sich auf ein Ortungssystem an einer selbstfahrenden landwirtschaftlichen Arbeitsmaschine, wie beispielsweise Mähdrescher, Feldhäcksler oder Zugmaschine, mit wenigstens einer berührungslos arbeitenden Ortungsvorrichtung und mit wenigstens einer Stelleinrichtung, zur Verstellung der Ausrichtung der Ortungsvorrichtung gegenüber der Arbeitsmaschine.

Ortungsvorrichtungen an selbstfahrenden landwirtschaftlichen Arbeitsmaschinen dienen der Entlastung der Bediener der Maschinen und der Erhöhung der Maschinenauslastung im Arbeitsbetrieb. Dies wird insbesondere durch die Ermittlung einer relativen Lage eines Transportfahrzeuges, einer Bearbeitungskante oder Leitgröße bezüglich des Arbeitsfahrzeuges und den hiervon abhängigen Steuerungen oder Regelungen von Einstellparametern oder einer automatischen Spurführung erreicht. Aus dem Stand der Technik sind einige berührungslos arbeitende Ortungsvorrichtungen bekannt geworden. Beispielsweise beschreibt die DE 195 08 942 A1 eine Reflex-Ortungsvorrichtung an einer Landmaschine in Form eines Ultraschallsensors, der oberhalb einer Getreidekante in Fahrtrichtung vorausschauend auf diese gerichtet an einem Schneidwerk eines Mähdreschers angebracht, die relative Lage der Getreidekante zum Schneidwerk ermittelt. Der ausgesendete Ultraschallimpuls bereitet sich keulenförmig in Richtung der Getreidekante aus und wird bei korrekter Ausrichtung zum einen an der Ährenoberfläche und zum anderen an der Stoppeloberfläche reflektiert. Durch den an der Getreidekante vorliegenden Höhenunterschied, treten die beiden Echos zeitlich beabstandet an der Ortungsvorrichtung auf und werden entsprechend in eine relative Lage der Getreidekante zur Ortungsvorrichtung beziehungsweise Landmaschine umgerechnet. Das ermittelte Signal wird einem automatischen Lenksystem an der Landmaschine zugeführt, welches hieraus automatisch einen Lenkwinkel an der Lenkachse derart generiert, so dass die Landmaschine der Getreidekante folgt. Der von der Ortungsvorrichtung erfasste Bereich um die Getreidekante herum, wird unter anderem von der Richtcharakteristik und der Abtastentfernung des Ultraschallsensors bestimmt. Dieser maximal mögliche Erfassungsbereich Ist begrenzt, sodass größere Änderungen im Verlauf der Getreidekante von dieser Ortungsvorrichtung nicht erfasst werden können und eine stabile automatische Lenkung nicht mehr sichergestellt werden kann. Ein weiterer Nachteil entsteht durch die träge Reaktion der Landmaschine auf eine Lenkbewegung. Eine von der Ortungsvorrichtung erkannte Änderung der relativen Lage der Getreidekante zu der Landmaschine, wird zwar von der automatischen Lenkung der Landmaschine direkt In eine Lenkbewegung umgesetzt, bewirkt aufgrund der Massenträghelt der Landmaschine eine verzögerte, träge Reaktion der Änderung der Fahrtrichtung der Landmaschine. Nachteilig kann es dann nun vorkommen, das der Erfassungsbereich der Ortungsvorrichtung die Getreidekante nicht mehr erfasst und eine automatische Lenkung der Landmaschine dann nicht mehr stabil möglich ist.
Die DE 197 26 917 A1 beschreibt eine Vorrichtung an einer Landmaschine zur berührungslosen Abtastung von sich über den Boden erstreckenden Konturen. An der Landmaschine ist in Fahrtrichtung vorausschauend, eine Laserentfernungsmessvorrichtung angebracht, die mittels eines in einer zum Bearbeitungsfeld geneigten Abtast-Ebenen verschwenkten Abtast- Laserstrahls, eine Kontur des Bearbeitungsfeldes aus der Anbringungsposition und den jeweiligen Entfernungssignalen in Verbindung mit dem Schwenkwinkel des Abtaststrahl ermittelt. Die Verschwenkung eines Abtast- Laserstahls mittels einer um eine vertikale Schwenkachse pendeind an der Landmaschine angebrachten Laserentfernungsmessvorrichtung oder mittels einer beweglichen Schwenkoptik In einer fest an der Landmaschine angeordneten Laserentfarnungsmessvorrichtung wird offenbart. Die hohe Abtastentfernung der Laserentfernungsmessvorrichtung ermöglicht eine Abtastung der Kontur ober eine große Breite vor der Landmaschine sowie eine frühe Erkennung von Änderungen im Verlauf einer aus der Kontur ermittelten, einer nachgeschalteten automatischen Spurführung zugeführten Leitgröße. Durch diese breite Abtastung der Kontur können ferner große Abweichungen der Leitgröße erkannt werden und wobei ferner auch bei einer trägen Reaktion der Landmaschine hierauf, die Leitgröße den Abtastbereich nicht verlassen kann. Durch die frühe Abtastung kann die Landmaschine vorausschauend auf die Leitgröße ausgerichtet werden, verliert aber hierdurch den direkten Bezug zur momentanen Lage der Leitgröße bezüglich des Einzugsbereichs der Arbeltsorgane der Landmaschine. Es kann daher zur ungenügenden Auslastung eines Schneidwerks oder zu Erntegutverlusten, durch ein Vorbeifahren des Einzugsbereichs an dem stehenden oder liegenden Erntegut, kommen. Der große Erfassungsbereich der Laserentfernungsmessvorrichtung erfordert nachteilig eine hohe Abtestgeschwindigkeit des Laserstrahls und führt ferner zur Speicherung einer größeren Datenmenge und längeren Auswertedeuer der Daten.
In der DE 197 19 939 A1 wird eine Ortungseinrichtung an einer lenkbaren Erntemaschine vorgeschlagen, die in Fahrtrichtung vorausschauend eine Leitgröße, wie beispielsweise eine Getreidekante, zum einen weit voraus und zum anderen zusätzlich im Einzugsbereich der Arbeitsorgane der Landmaschine abtastet. Der nachgeschaltete Lenkregler erhält somit ein fernes und ein nahes Signal über die relative Lage der Leitgröße zur Erntemaschine und kann dann die Lenkbewegung so veranlassen, dass eine ausreichend zuverlässige Erntegutaufnahme bei gleichzeitiger frühzeitiger Ausrichtung der Erntemaschine entlang der Leitgröße erzielt wird. Auf eine größere Änderung der Leitgröße ist folgend eine größere Lenkbewegung notwendig, diese wird von der fernen Ortungsvorrichtung erkannt, aber von dem nahen Abtastsignal vorteilhaft beschränkt. Damit nun das ferne Abtastsignal hierbei die Leitgröße nicht verliert, ist eine möglichst breite Erfassung des Bereichs quer zur Leitgröße erforderlich. Dies verteuert nachteilig die Ortungsvorrichtung für diese Fernabtastung und bedingt eine höhere Abtastrate der Vorrichtung sowie eine längere Datenauswertung der anfallenden höheren Datenmenge.

Aus der gattunasbildenden EP 1 002 455 A2 ist ein Verfahren zur Justage einer an einer landwirtschaftlichen Arbeitsmaschine befestigten berührungslos arbeitenden Sensoreinheit eines Ortungssystemes sowie eine entsprechende Justiereinrichtung bekannt. Der Sensoreinheit sind Stellmittel zugeordnet, die der Verstellung der Sensoreinheit in horizontaler und vertikaler Richtung dienen. Durch die Auswertung von Sensorsignalen wird die Sensoreinheit zu Beginn einer Fahrt durch die Stellmittel justiert, bis die Sensoreinheit durch die Detektion eines Referenzpunkts eine Justierlage erreicht hat, die für den nachfolgenden Einsatz der Arbeitsmaschine auch über die Dauer der Erntesaison beibehalten wird. Nachteilig an dieser Justiereinrichtung ist die mangelnde Flexibilität bei auftretenden. Änderungen der Leitgröße.

Es Ist nun Aufgabe der Erfindung ein Ortungssystem an landwirtschaftlichen Arbeitsmaschinen zu schaffen, welches eine sichere Erfassung von Leitgrößen gewährleistet und die eingangs beschriebenen Mängel der bekannten Ortungseinrichtungen behebt.

Die Lösung der Aufgabe wird durch ein Ortungssystem gegeben, welches dadurch gekennzeichnet ist, dass die Ortungsvorrichtung einen die Leltgröße beinhaltenden Erfassungsbereich sensiert und die Lage des Erfassungsbereichs gegenüber der Arbeitsmaschine änderbar ist und die Änderung in Abhängigkeit von der Änderung der Leitgröße erfolgt, wobei während dem Arbeitsbetrieb der landwirtschaftlichen Arbeitsmaschine eine sich veränderte Lage der Leitgröße eine Nachführung des Erfassungsbereichs des Ortungsvorrichtung bewirkt.

Vorteilhaft verliert die Ortungsvorrichtung selbst bei größeren Änderungen im Verlauf der Leitgröße, die Leitgröße nie. Der Erfassungsbereich der Ortungsvorrichtung wird vorteilhaft hierdurch von der Bewegung der Arbeitsmaschine entkoppelt und bleibt auf die Leitgröße ausgerichtet. Weiterhin kann die Leitgröße vorteilhaft auf einen geringen Bereich eingeschränkt und es können ferner Ortungsvorrichtungen mit einem bauartbedingten schmalen Erfassungsbereich, wie beispielsweise die im Stand der Technik beschriebene Ultraschall- Ortungsvorrichtung, verwendet werden. Die Verwendung eines schmalen Erfassungsbereichs der Ortungsvorrichtungen erbringt in Verbindung mit der vorgeschlagenen Lösung, die weiteren nachfolgend beschriebenen Vorteile. Die Ortungsvorrichtungen sind hierdurch kostengünstiger. Dies wird insbesondere durch die Verwendungsmöglichkeit einfacher Schwenkeinrichtung für das berührungslos arbeitende Abtastsignal erreicht. Weiterhin lassen sich derartige Ortungsvorrichtungen vorteilhaft gezielt auf eine Leitgröße ausrichten und werden dann nicht durch weitere im Umfeld der Leitgröße vorhandene eventuell ähnliche Leitgrößen oder weitere vorhandene miterfasste Konturänderungen beeinflusst. Ferner ergibt sich die Möglichkeit eine höhere Abtastrate bei einer vergleichbar geringeren Datenmenge zu erzielen. Die Zuverlässigkeit der Erkennung der Leitgrößen wird hierdurch merklich erhöht.
Vorteilhaft lässt sich die Ortungsvorrichtung mit geringem Erfassungsbereich, beispielsweise zur Initialisierung des Ortungssystems, beispielsweise zur automatischen Anpassung an unterschiedliche Arbeitsbreiten der Vorsatz- oder Arbeitsgeräte oder zur Findung einer Leitgröße, zunächst automatisch oder manuell über einen Bereich, mittels der erfindungsgemäß vorhandenen Stelleinrichtung, verschwenken um dann die hierbei gefundene oder ausgewählte Lage einer Leitgröße gegenüber der Arbeitsmaschine, als Basisausrichtung oder Nulllage zu verwenden.
Durch die gegenüber der gesamten Arbeitsmaschine vernachlässigbaren Eigenmasse der Ortungsvorrichtung wird vorteilhaft, eine Verstellung der relativen Ausrichtung der Ortungsvorrichtung an der Arbeitsmaschine mit einer hohen Dynamik möglich. Eine direkte Nachführung der Ortungsvorrichtung, aufgrund einer Änderung der Lage der Leitgröße gegenüber der Arbeitsmaschine, kann hierdurch ohne nennenswerte Verzögerung und Regelabweichung vorteilhaft durchgeführt werden.

In einer ersten Ausgestaltung der Erfindung, wird der Erfassungsbereich von einem in einer Ebene zwischen zwei Bereichsgrenzen verschwenkbaren Abtaststrahl oder von einem flächig abtastenden Strahlenbündel gebildet. Mit dem Abtaststrahl wird vorteilhaft eine Kontur, durch eine Entfernungsmessung in Verbindung mit einer Laufzeitmessung zwischen eines ausgesendeten und empfangenen Signals, punktuell abgetastet. Dabei wird die Kontur aus einzelnen Punkten zusammengesetzt und dann aus dem Verlauf der Kontur eine Leitgröße und dessen relative Lage zur Ortungsvorrichtung ermittelt. Hierzu eignet sich insbesondere ein Laserstrahl, der um eine Achse in einer Ebene verschwenkt wird. Der Erfassungsbereich wird ferner von einem flächig abtastenden Strahlenbündel gebildet. Dieses Strahlenbündel wird beispielsweise von einer Schallkeule eines Ultraschallsensor gebildet. Die Laufzeit einer akustischen Welle und die Intensität des Echos werden hierbei ausgewertet. Die Laufzeit und die Intensität des Echos wird von der Fläche bestimmt, an welcher die akustische Welle reflektiert wird. Insbesondere die Intensität des Echos ergibt in Verbindung mit einem Vergleichswert ein auswertbares Maß für die Lage der Leitgröße bezüglich der Ortungsvorrichtung.

Besonders vorteilhaft, insbesondere für die Haltbarkeit der Stelleinrichtung, wirkt es sich aus, wenn der Erfassungsbereich der Ortungsvorrichtung nur dann von zumindest einer Stelleinrichtung gegenüber der Arbeitsmaschine erneut ausgerichtet wird, wenn sich die erfasste Leitgröße an die Bereichsgrenze des Erfassungsbereichs der Ortungsvorrichtung bewegt. Es wird hierdurch vorteilhaft sichergestellt, dass die Leitgröße den Erfassungsbereich der Ortungsvorrichtung nicht verlassen kann und gleichzeitig die Stellfolge der Stelleinrichtung begrenzt wird.

In einer Weiterbildung der Erfindung wird der mittlere Erfassungsbereich der Ortungseinrichtung, mittels zumindest einer Stelleinrichtung, automatisch auf die Leitgröße ausgerichtet. Hierdurch wird vorteilhaft eine Erfassung der nachfolgenden Änderungen im Verlauf beziehungsweise der Änderung der Lage der Leitgröße zu beiden Seiten der Leitgröße um den gleichen Betrag ermöglicht.

In einer weiteren Ausgestaltung der Erfindung, ist die Ortungsvorrichtung an der Arbeitsmaschine mittels der zumindest einen Stelleinrichtung um wenigstens eine annähernd vertikale Achse gegenüber der Arbeitsmaschine schwenkbar angeordnet. Hierdurch lässt sich eine Anpassung der Ausrichtung des Erfassungsbereichs der Ortungsvorrichtung an eine Vielzahl von Leitgrößen und Arbeitsmaschinen, durch eine einfache Halterung mit einer vertikalen Achse und eine daran angreifende Steileinrichtung kostengünstig erzielen. Insbesondere ist eine horizontale Nachführung des Erfassungsbereichs der Ortungsvorrichtung zur sicheren Erkennung der Lage der Leitgröße erforderlich, da eine Abtastung zu beiden Seiten der Leitgröße hin für die Erkennung derselben notwendig ist. Die Verstellung der Ausrichtung der Ortungsvorrichtung um eine vertikale Achse erbringt vorteilhaft eine einfache Erfassung der Ausrichtung durch kostengünstige und bekannte Sensoren. Auch das bei einer Entlangfahrt am Hang sich Querstellen der Arbeitsmaschine, zur Überwindung des Hangabdrifts, stellt für das Ortungssystem kein Problem dar. Die hierbei auftretende Verschwenkung des Erfassungsbereichs der Ortungsvorrichtung von der Bestandskante weg, kann vorteilhaft durch ein fixes oder der Hangneigung entsprechendes entgegengerichtetes Schwenken der Ortungsvorrichtung um die vertikale Achse manuell oder automatisch gesteuert behoben werden. Insbesondere lassen sich auch verschiedene Aufgaben bei der Spurführung, durch das vorgeschlagene Ortungssystem lösen. Tritt beispielsweise beim Pflügen die Leitgröße "Furche" wechselseitig auf, kann die entsprechende notwendige Ausrichtung des Erfassungsbereichs, durch ein einfaches hin und her schwenken der Ortungsvorrichtung ohne zusätzlichen Aufwand realisiert werden.

Durch die erfindungsgemäße Lösung wird ein vielseitig einsetzbares Ortungssystem zur Erkennung von unterschiedlichen Leitgrößen, wie beispielsweise eine Bestandskante und/oder ein Schwad und/oder eine Furche und/oder eine Ladebehälterkante und für ein weites Einsatzgebiet an landwirtschaftlichen Arbeitsmaschinen oder Arbeitsfahrzeugen geschaffen. Die einzelnen Leitgrößen werden vorteilhaft anhand eines zugehörigen Auswertekriteriums erkannt, wobei eine Ortungsvorrichtung, beispielsweise eine Laserreflexortungsvorrichtung zur Erkennung mehrerer Leitgrößen und in unterschiedlichen Ausrichtungen und Anbringungen an einer Arbeitsmaschine eingesetzt und mit unterschiedlichen Auswerteverfahren zur Erkennung unterschiedlicher Leitgrößen ausgestattet werden.

In einer weiteren vorteilhaften Ausgestaltung der Erfindung, wird die von der Ortungsvorrichtung erfasste Lage der Leitgröße gegenüber der Ortungsvorrichtung und/oder die Ausrichtung der Ortungsvorrichtung gegenüber der Arbeitsmaschine bei der Einstellung wenigstens eines Parameters der Arbeitsmaschine berücksichtigt. Durch diese Auswertung der erfassten Leitgröße lässt sich vorteilhaft die absolute Lage der Leitgröße bezüglich der Arbeitsmaschine jederzeit ermitteln und für eine Einstellung der Arbeitsmaschine verwenden. Insbesondere während einer automatischen Nachführung der Ortungsvorrichtung, aufgrund einer Änderung der Lage der Leitgröße, an der Arbeitsmaschine wird eine gewisse Verstellzeit von der Stelleinrichtung benötigt. Eine Addition der einzelnen Ausrichtungen, Leitgröße zur Ortungsvorrichtung, Ortungsvorrichtung zur Arbeitsmaschine, lässt sich auch während der Verstellung die absolute Lage ermitteln. Besonders vorteilhaft ist diese Ausgestaltung der Erfindung, wenn die Ortungsvorrichtung nur bei einer an die Bereichsgrenze gelangten Leitgröße der Erfassungsbereich erneut mittig auf die Leitgröße ausgerichtet wird. Hierbei kann die von der Leitgröße abhängige Einstellung der Arbeitsmaschine mit hoher Genauigkeit ausführen zu können.

In einer Ausgestaltung der Erfindung, wird die Ausrichtung der Ortungsvorrichtung, insbesondere der vertikale Winkel a,d gegenüber der Arbeitsmaschine zur automatischen Spurführung der Arbeitsmaschine verwendet. Die Verwendung des Ortungssystems erbringt bekanntlich eine enorme Entlastung der Bediener der Arbeitsmaschine und erzielt ferner insbesondere bei der Verwendung an einem Schneidwerk eines Mähdrescher, eine höhere Auslastung des Schneidwerks und folglich auch des Mähdreschers selbst. Für die Spurführung steht vorteilhaft ständig der gesamte Erfassungsbereich der Ortungsvorrichtung zur Verfügung, unabhängig von der momentanen Ausrichtung der Arbeitsmaschine zur Leitgröße. Eine Erkennung der Leitgröße wird somit jederzeit mit geringem Kostenaufwand ermöglicht.

Um eine besonders exakte Auswertung der Lage der Leitgröße bezüglich der Arbeitsmaschine zu bekommen, wird zusätzlich die von der Ortungsvorrichtung erfasste Lage der Leitgröße gegenüber der Ortungsvorrichtung, zur automatischen Spurführung der Arbeitsmaschine verwendet. Vorteilhaft werden hierdurch auch kleinere Änderungen im Verlauf der Leitgröße, die nicht zu einer Verstellung der Ortungsvorrichtung gegenüber der Arbeitsmaschine führen, bei der Spurführung mit berücksichtigt. Auch die noch vorhandenen Reaktions- und Stellzeiten, für die Nachführung der Ortungsvorrichtung insbesondere auch bei größeren Abweichungen der Leitgröße, bewirken dann vorteilhaft keine verzögerten Erfassung und Reaktion durch die nachgeschaltete Spurführung.

In einer weiteren Ausgestaltung der Erfindung, wird die Ausrichtung der Arbeitsmaschine bezüglich der Leitgröße im Einzugsbereichs der Arbeitsmaschine, von wenigstens einer weiteren Ortungsvorrichtung erfasst und zusätzlich bei der automatischen Spurführung mit berücksichtigt. Hierdurch wird vorteilhaft eine Zuordnung der aktuellen Ausrichtung der Arbeitsmaschine an der Leitgröße in Verbindung mit dem zukünftigen vorausliegenden Verlauf der Leitgröße gewährleistet, wodurch eine verbesserte Spurführung erreicht werden kann. Die zusätzliche Erfassung der Leitgröße durch eine weitere Ortungsvorrichtung stellt hierbei vorteilhaft sicher, dass bei der automatischen Spurführung der Arbeitsmaschine die Einzugsorgane im unmittelbaren Einzugsbereich mit dem Erntegut ausreichend ausgelastet und ferner hierbei keine Erntegutverluste verursacht werden.

In einer weiteren Ausgestaltung der Erfindung, wird die Ausrichtung der Ortungsvorrichtung, insbesondere der Winkel a,d gegenüber der Arbeitsmaschine, bei einer automatischen Steuerung wenigstens einer Einstellgröße eines Überladekrümmers an einer Arbeitsmaschine, wie beispielsweise die Überladerichtung, berücksichtigt. Die hierbei erfasste Leitgröße ist beispielsweise eine senkrechte Ladebehälterkante und gibt vorteilhaft die Lage eines Arbeitsfahrzeug bezüglich der Arbeitsmaschine an. Aus der ermittelten Lage des Transportfahrzeuges kann die Überladerichtung des Überladekrümmers automatisch gesteuert werden. Aus dem sensierten Erfassungsbereich kann vorteilhaft der Abstand ermittelt und die Überladeweite des Überladekrümmers automatisch gesteuert werden. Diese Verwendung erbringt eine Entlastung der Bediener und eine einfache Erfassung und Verfolgung unterschiedlicher Transportbehälter.

Weiterhin kann die relative Ausrichtung der Ortungsvorrichtung, insbesondere der Winkel a,d gegenüber der Arbeitsmaschine, in einer weiteren Ausgestaltung der Erfindung, zur automatischen Koordination eines Arbeitsfahrzeugs, verwendet werden. Insbesondere bei der Überladung von Erntegut auf ein parallelfahrendes Arbeitsfahrzeug kann eine vorteilhafte Koordination durch, die sichere frühzeitige Erkennung des Verlaufs der Leitgröße, in Form einer Erntegutkante oder Erntegutschwades und ferner die vorteilhafte Erfassung des Ladebehälters durchgeführt werden.

In einer besondern Weiterbildung der Erfindung, ist die Ortungsvorrichtung mit einer Navigationseinrichtung ausgestattet. Hierdurch kann vorteilhaft die absolute Lage der Ortungsvorrichtung auf einem Bearbeitungsfeld ermittelt werden. Die von dem Ortungssystem erfasste Lage der Leitgröße, kann weiterhin vorteilhaft bezüglich der Lage der Ortungsvorrichtung vorausschauend ermittelt und für eine weitere Verwendung beispielsweise in einer Bearbeitungsfeldkarte abgespeichert werden.

In einer weiteren Ausgestaltung der Erfindung, wird die von der Ortungsvorrichtung erfasste Lage der Leitgröße gegenüber der Ortungsvorrichtung und die Ausrichtung der Ortungsvorrichtung gegenüber der Arbeitsmaschine, in Verbindung mit der von der Navigationseinrichtung ermittelten Position der Ortungsvorrichtung, in wenigstens einer Einrichtung zur Planung und/oder Steuerung entlang einer Fahrtroute für die Arbeitsmaschine und/oder eines Arbeitsfahrzeugs verwendet. Durch die Verbindung der von dem Ortungssystem ermittelten Lage der Leitgröße bezüglich einer navigierten Position auf dem Bearbeitungsfeld, lassen sich vorteilhaft der Verlauf der Leitgröße anhand von aufgezeichneten absoluten Positionen entgegen der Fahrtrichtung der Arbeitsmaschine von der aktuellen erfassten Position rückwärtig auswerten. Es kann daher vorteilhaft ein Vergleich der absoluten Lage anhand der aufgezeichneten Leitgrößen und der aktuellen Lage der Ortungsvorrichtung im Einzugsbereich zur Erkennung der aktuellen Auslastung erfolgen. Weiterhin ermöglicht der erkannte Verlauf der Leitgröße auch die Planung einer Fahrtroute für die Arbeitsmaschine und eine automatische Spurführung anhand der geplanten und aktuellen Position der Arbeitsmaschine auf dem Bearbeitungsfeld. Auch eine abhängige vorrauschauende Planung der Fahrtroute und eine hiernach anschließende automatische Spurführung für ein parallelfahrendes Arbeitsfahrzeug, kann vorteilhaft durchgeführt werden.

In einer besonderen Ausgestaltung der Erfindung, wird die Bezugsausrichtung des Erfassungsbereichs der Ortungsvorrichtung von wenigstens einer Einstellung der Arbeitsmaschine abhängig vorgegeben. Diese Bezugsausrichtung stellt eine Nulllage der Ausrichtung der Ortungsvorrichtung an der Arbeitsmaschine dar, welche dann als Bezugswert zur Bestimmung der Regelabweichung für eine von der Ausrichtung des Erfassungsbereichs und insbesondere der Lage der Leitgröße bezüglich der Arbeitsmaschine abhängigen Verwendung dient. Weiterhin wird hierdurch vorteilhaft eine Voreinstellung der Ausrichtung des Erfassungsbereiches bezüglich der Arbeitsmaschine möglich. So kann vorteilhaft die Ortungsvorrichtung beispielsweise in Abhängigkeit einer vorgewählten Schnitthöhe des Schneidwerks, auf eine bestimmte Neigung zum Bestand voreingestellt werden. Ferner kann beispielsweise die Ausrichtung der Ortungsvorrichtung zur Abtastung eines Ladebehälters, von der beabsichtigten Überladerichtung, anhand der Einstellung des Überladekrümmers voreingestellt werden. Diese erbringt den Vorteil, dass bei einem Wechsel der Überladerichtung beispielsweise von links nach rechts, schon während der Verschwenkung des Überladekrümmers, auch der Erfassungsbereich der Ortungseinrichtung, auf die ungefähre zu erwartende neue Lage der Leitgröße bezüglich der Arbeitsmaschine eingestellt wird. Dies kann vorteilhaft durch eine Aufschaltung eines Offset auf eine absolute Basiseinstellung des die Stellung der Ortungsvorrichtung bezüglich der Arbeitsmaschine ermittelten Sensorssignals erfolgen. Die Steuerung der Stelleinrichtung regelt dann die hierdurch erzeugte Regelabweichung aus, ohne die dabei von der Ortungseinrichtung erkannten Leitgrößen im Erfassungsbereich auszuwerten beziehungsweise zu beachten. Auch ein sogenanntes Lernen der Bezugausrichtung hat sich als vorteilhaft erwiesen. Hierzu wird der Erfassungsbereich der Ortungsvorrichtung manuell oder in einem Start- oder Initialisierungsschritt auf die Leitgröße ausgerichtet und die dann bestehende Ausrichtung bezüglich der Arbeitsmaschine als Bezugsausrichtung verwendet. Für eine automatischen Spurführung wird die Bezugsausrichtung in der Regel bei einer in Fahrtrichtung oberhalb der Bestandskante zu dieser hin geneigten Ausrichtung des Erfassungsbereichs, durch eine in Richtung der Fahrtrichtung oder senkrecht dazu ausgerichtet vorgewählt.

Der Einsatz einer Ortungsvorrichtung wird insbesondere durch die Verwendung an verschiedenen landwirtschaftlichen Arbeitsmaschinen oder durch den vielseitigen Einsatz an einer Arbeitsmaschine besonders kostengünstig. In einer besonderen Ausgestaltung der Erfindung, kann der Erfassungsbereich der Ortungsvorrichtung in Verbindung mit der zu ortenden Leitgröße an diese angepasst werden. Dies macht die Erkennung verschiedener Leitgrößen aus einer abgetasteten Kontur, durch eine von der Leitgröße abhängige unterschiedliche Abtastbreite möglich. Die Erkennung der Mitte eines Schwades als Leitgröße, erfordert die Erfassung über die gesamte Breite Schwadquerschnittes hinaus. Eine Bearbeitungskante kann dagegen in einem geringeren Erfassungsbereich sicher erkannt werden. Die vorteilhafte Anpassung ermöglicht eine in Abhängigkeit der erfassten Leitgröße bestimmte begrenzte anfallende Datenmenge. Eine anvisierte Bearbeitungskante oder Ladebehälterkante wird durch einen Entfernungssprung in der abgetasteten Kontur ermittelt. Vorteilhaft können durch eine Anpassung beziehungsweise eine bereichsweise vorgenommene Beschränkung der Abtastentfernung, benachbarte weitere jedoch weiter entfernt liegende Leitgrößen ausgeblendet und hierdurch eine sichere Erkennung der gewünschten Leitgröße ermöglicht werden.

Anhand von Ausführungsbeispielen soll die Erfindung nachfolgend näher erläutert werden. Es zeigen:
- Figur 1: ein Mähdrescher mit am Schneidwerk angeordneter Ortungsvorrichtung in einer Seitenansicht,
- Figur 2: eine Draufsicht auf einen im Arbeitseinsatz befindlichen Mähdrescher,
- Figur 3: eine Draufsicht auf einen Feldhäcksler mit zwei daran angeordneten Ortungsvorrichtungen und ein parallelfahrendes Transportfahrzeug und
- Figur 4: eine Seitenansicht eines an einem Halterohr um eine vertikal und horizontale Achse schwenkbare Ortungsvorrichtung.

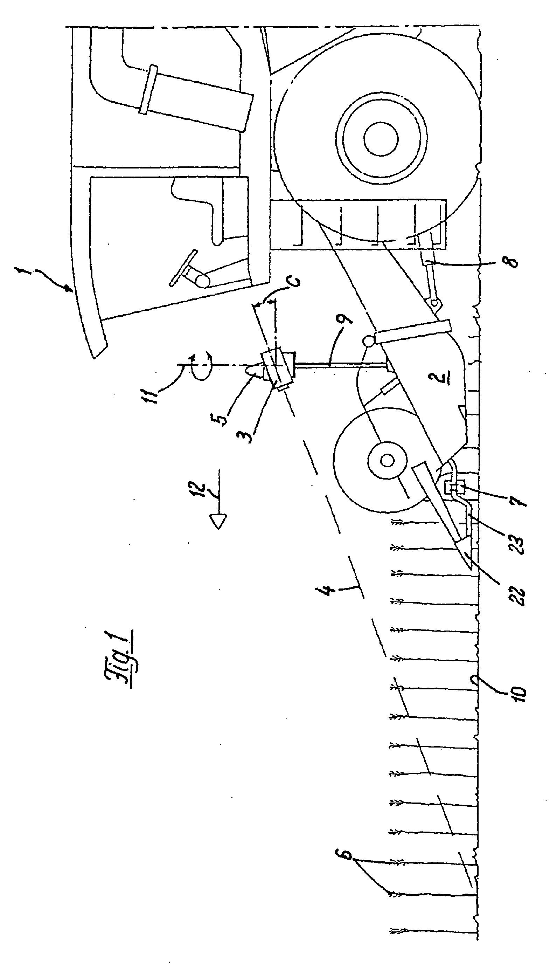

In der Figur 1 wird ein Mähdrescher 1 mit einem, mittels eines Hubzylinders 8 um eine horizontale Achse schwenkbar, höhenbeweglich an diesem angeordneten Schneidwerk 2 und eine daran befestigte Ortungsvorrichtung 3 in einer Seitenansicht dargestellt. Die Ortungsvorrichtung 3 ist oberhalb einer Getreidekante an einem Halterohr 9 um wenigstens eine vertikale Schwenkachse 11, gegenüber dem Halterohr 9 und dem Mähdrescher 1, automatisch schwenkbar angeordnet, wobei dieser Schwenkwinkel 360° betragen kann. Die in Fahrtrichtung 12 vorausschauend, zum Bestand 6 hin um den Winkel c geneigte Ortungsvorrichtung 3, tastet mittels eines Abtaststrahls 4 die Entfernung der Ortungsvorrichtung 3 zum Bestand 6 und Bearbeitungsfeld 10 ab. Hierzu können jegliche dem Fachmann bekannte, berührungslos arbeitende Reflex-Ortungsvorrichtungen verwendet werden. Insbesondere wird diese Entfernung mittels einer Laufzeitmessung zwischen einem gesendeten und empfangenen Radar, Schalloder Lichtimpuls bestimmt.

In der Figur 1 wird beispielhaft als Ortungsvorrichtung 3, eine Laserreflexortungsvorrichtung gezeigt. Diese ist um eine Achse 11 vertikal gegenüber dem Halterrohr 9 schwenkbar angebracht. Der von einer hier nicht dargestellten Stelleinrichtung erzeugbare maximal um die vertikale Achse 11 mögliche Schwenkwinkel, kann bis zu 360° betragen. In der Ortungsvorrichtung 3 selbst ist eine bewegte Ablenkeinrichtung vorhanden, welche den Abtaststrahl 4 um eine annähernd senkrechte Achse bezüglich der Ortungsvorrichtung 3, in einer horizontalen Ebene oszillierend hin und her bewegt. Dabei tastet der Abtaststrahl 4 die Kontur eines Bestandes 6 beziehungsweise des Bearbeitungsfeldes 10 im momentanen Erfassungsbereich ab. Die Kontur wird dabei aus den Entfernungssignalen in Verbindung mit der relativen Ausrichtung des Abtaststrahls 4 bezüglich der Arbeitsmaschine ermittelt, wobei diese Ausrichtung anhand der relativen Ausrichtung der Ortungsvorrichtung 3 bezüglich dem Halterohr 9 und aus der relativen Ausrichtung des Abtaststrahls 4 bezüglich der Ortungsvorrichtung 3 berechnet wird. Der maximal mögliche Schwenkwinkel um die vertikale Achse 11, wird nur dann durchfahren, wenn innerhalb der von dem Abtaststrahl 4 abgetasteten Kontur, keine Leitgröße erkannt werden kann. Beispielsweise wird zunächst der Abtaststrahl 4 gegenüber der Ortungsvorrichtung 3 um ca. 15° geschwenkt und dabei die einzelnen Abtastentfernungen als eine Kontur zusammenhängend ausgewertet. Entfernungssprünge oder Extremwerte, wie Tiefen oder Höhen in der Kontur, werden als Leitgröße erkannt. Dabei gibt der jeweilige Einsatz, die Auswertung, d.h. nach welcher entsprechenden Charakteristik der Leitgröße in der Kontur gesucht wird, vor. Wird keine Leitgröße in der gescannten Kontur erkannt, wird die Ortungsvorrichtung 3 mittels der Stelleinrichtung um die vertikale Achse 11 geschwenkt und erneut die Kontur in diesem Bereich abgetastet. Dieser Vorgang wiederholt sich so lange, bis von der Ortungsvorrichtung 3 eine Leitgröße erkannt wird. Die Verschwenkung der Ortungsvorrichtung 3 um die vertikale Achse 11 kann hierbei automatisch oder manuell erfolgen. Vorteilhaft wird dieser Vorgang im Stillstand bei korrekter Lage der Arbeitsmaschine 1 gegenüber der Leitgröße durchgeführt. Die Ortungsvorrichtung 3 wird dann in diesem Initialisierungsschritt mit dem Erfassungsbereich so auf die Leitgröße ausgerichtet, das die Leitgröße im mittleren Bereich des Erfassungsbereichs erkannt wird. Die sich einstellende Ausrichtung der Ortungsvorrichtung 3 gegenüber der Arbeitsmaschine 1 wird dann als Basisausrichtung beispielsweise als Sollgröße für eine automatische Lenkeinrichtung auf des Mähdreschers 1 verwendet.

Die verwendetet Laserreflexortungsvorrichtung kann ferner eine Ortungsvorrichtung 3 sein, die mit einem gegenüber der Ortungsvorrichtung feststehenden Abtast-Laserstrahl 4 arbeitet. In einem Start- oder Initialisierungsschritt wird dann die Ortungsvorrichtung 3 von der Stelleinrichtung über eine größeren Winkel, beispielsweise 360°, um die vertikale Achse 11 geschwenkt. Die dabei erkannten Entfernungswerte werden zusammenhängen als Kontur betrachtet und entsprechend der gesuchten Charakteristik der Leitgröße ausgewertet. Wird in der abgetasteten Kontur eine Leitgröße wie beispielsweise eine Furche, Bestandskante, Schwad erkannt, wird die Lage der Leitgröße als Basisausrichtung abgespeichert und der Abtaststrahls 4 oszillierend mit einem geringen Winkel um die Basisausrichtung bewegt, d.h. die Leitgröße und der angrenzende Bereich wird ständig abgetastet.
Es kann ferner eine Laserreflexortungsvorrichtung verwendet werden, die einen Abtaststrahl 4 über eine großen Winkel, bis zu 360° verschwenkt. Wird dann eine Leitgröße wie zuvor beschrieben erkannt, wird der abgetastet Bereich auf wenige Grad (15°) eingeschränkt und die Ortungsvorrichtung 3 dann mittels der Stelleinrichtung auf die Leitgröße ausgerichtet.
Die Verwendung einer bekannten Ultraschallortungsvorrichtung ist weiterhin möglich. Dabei wird die Ortungsvorrichtung 3 auf dem Halterohr 9 mit ihrer Schallkeule von oben auf die Bestandskante ausgerichtet angebracht. In einem Initialisierungsschritt wird die der Basisausrichtung so ausgerichtet, dass das dabei sensierte Echosignal, etwa einem halben Echosignal entspricht, welches bei einer voll auf den Bestand ausgerichteten Schallkeule entsteht.
Unabhängig der verwendeten Ortungsvorrichtung 3 beziehungsweise des Start- oder Initialisierungsschritts, bewirkt während dem Arbeitsbetrieb des Mähdreschers 1, eine sich veränderte Lage der Leitgröße bezüglich des Mähdreschers 1 oder des Mähdreschers 1 bezüglich der Leitgröße, eine erfindungsgemäße Nachführung des Erfassungsbereichs der Ortungsvorrichtung 3 mittels der Stelleinrichtung, wobei der Abtaststrahl 4 oder die Schallkeule stets etwa zu gleichen Teilen die benachbarten Bereiche zur Leitgröße abtastet. Die sich einstellende veränderte Ausrichtung der Ortungsvorrichtung 3 bezüglich des Mähdreschers 1 wird von einer Sensorik erfasst und einer nachgeschalteten Einrichtung, wie beispielsweise der automatischen Spurführung als Ist-Signal zugeführt. Anhand der Bezugsausrichtung wird von der Einrichtung zur Spurführung eine Regelabweichung ermittelt und ein entsprechendes Stellsignal zur Verstellung der Lenkräder erzeugt. Hierdurch wird die Fahrtrichtung 12 des Mähdreschers 1 derart beeinflusst, dass der Mähdrescher 1 dem geänderten Verlauf der Bestandskante folgt. Verursacht durch die Änderung der Fahrtrichtung 12 des Mähdreschers 1 wird der Erfassungsbereich der Ortungsvorrichtung 3 relativ zur Bestandskante bewegt. Die Ausrichtung der Ortungsvorrichtung 3 wird erfindungsgemäß durch das Ortungssystem in Richtung der Bezugsausrichtung verstellt, wodurch gleichzeitig eine Reduzierung der Regelabweichung erfolgt. Die Regelabweichung wird dann zu Null, wenn die Ortungsvorrichtung 3 die Bestandkante wieder mit der zuvor bestimmten Bezugausrichtung zum Mähdrescher 1 erfasst.
Die Ortungsvorrichtung 3 kann ferner um eine horizontale Achse, an dem Halterohr 9 schwenkbar befestigt sein. Diese Möglichkeit dient einer einmaligen Justage der Ortungsvorrichtung 3 an dem Halterohr 9, bezüglich der Neigung an dem Schneidwerk 2 zum Bestand 6 hin. Ferner kann diese Einstellmöglichkeit auch von einer Stelleinrichtung automatisch, zur Einhaltung einer konstanten Entfernung, beispielsweise zum Bearbeitungsfeld 10, ferngesteuert durchgeführt werden. Besonders zur Anpassung der Ausrichtung der Ortungsvorrichtung 3 an verschiedene Bestandshöhen und/oder Schnitthöhen des Schneidwerks 2, kann diese horizontale Stellfunktion Verwendung finden. Weiterhin ist es besonders vorteilhaft die Vorausschau der Ortungsvorrichtung 3, zum Ausgleich von wellenförmigen Verläufen entlang der Bestandskante beziehungsweise zur Stabilisierung des Lenkregelkreises, an unterschiedliche Fahrgeschwindigkeiten, durch unterschiedliche Neigungen einzustellen. Eine höhere Fahrgeschwindigkeit bewirkt dann eine weitere Vorausschau der Ortungsvorrichtung 3.
An dem Schneidwerk 2 ist im Einzugsbereich eine weitere Ortungsvorrichtung 7 quer zur Fahrtrichtung 12 des Mähdreschers 1 ausgerichtet angeordnet. Diese Ortungsvorrichtung 7 ermittelt die Auslastung des Schneidwerks 2 anhand des Abstandes zwischen dem am Bestand 6 vorbeigeführten Haltearm 23 des Halmteilers 22 und dem Bestand 6. An der Ortungsvorrichtung 3 ist obenauf eine Navigationsantenne 5 angeordnet. Diese ermittelt die absolute Position der Ortungsvorrichtung 3 auf dem Bearbeitungsfeld 10. Die von den Ortungsvorrichtungen 3 und 7 ermittelten Lagen der Leitgröße zum Schneidwerk 2, lassen sich erfindungsgemäß der absoluten Position der Ortungsvorrichtung 3 zuordnen und gegebenenfalls in einer Speichereinrichtung hinterlegen. Der Verlauf der Leitgröße kann dann bezüglich des Bearbeitungsfeldes 10 aufgezeichnet, zur direkten Spurführung des Mähdreschers 1 verwendet und ferner als Basis einer nachfolgenden spurgeführten Entlangfahrt der selben oder einer anderen Arbeitsmaschine an einer Bestandskante dienen. Die Navigationsantenne 5 kann auch von der Ortungsvorrichtung 3 beabstandet an dem Mähdrescher 1 angebracht werden und beispielsweise die Positionsdaten für eine Spurführung und/oder Ertragskartierung des Mähdreschers 1 liefern.

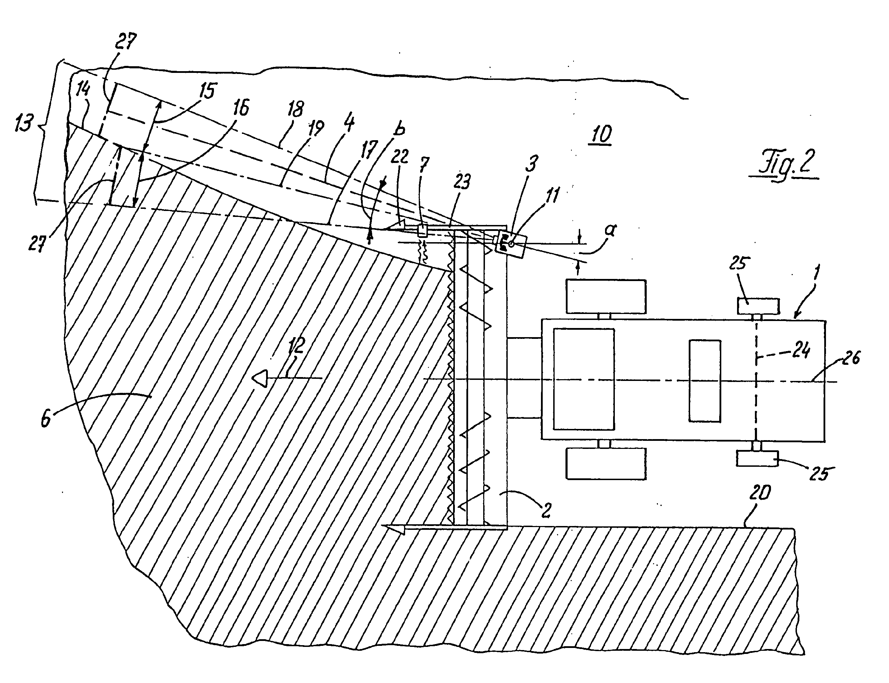

Die Figur 2 zeigt eine Draufsicht auf einen im Arbeitseinsatz befindlichen Mähdrescher 1. Bei einer Überfahrt in Fahrtrichtung 12 über das Bearbeitungsfeld 10, schneidet der Mähdrescher 1 mit dem Schneidwerk 2 über eine hiervon bestimmte Breite, Getreide von dem Bearbeitungsfeld 10 ab. Dabei wird die vorhandene Bestandskante 14 quer zur Fahrtrichtung 12, um die tatsächliche Arbeitsbreite des Schneidwerks 2, in eine neue Bearbeitungskante 20 parallel verlagert. Diese neue Bearbeitungskante 20 ist für die Spurführung eines nachfolgenden Mähdrescher oder bei der nächsten Entlangfahrt des Mähdreschers 1 als neue Bestandskante 20 maßgebend. Die Aufgabe des Bedieners eines Mähdreschers 1 ist es dabei, das Schneidwerk 2 mit einer möglichst hohen Auslastung und ohne das dabei Erntegut stehen bleibt an der vorhandenen Bestandskante 14 entlang zuführen. Hierzu haben sich als besonders effektiv, automatische Lenksysteme an landwirtschaftlichen Arbeitsmaschinen 1 erwiesen. Diese erfassen mittels einer Ortungsvorrichtung 3 vorrausschauend die Bestandskante 14. Ein nachgeschalteter Lenkregler erfasst das erzeugte Ortungssignal und steuert mittels einer dem Fachmann bekannten elektrohydraulischen Lenkeinrichtung, die Lenkräder 25 an einer Lenkachse 24 des Mähdreschers 1 so, dass die von der Ortungsvorrichtung 3 erkannte Regelabweichung ausgeregelt wird. Es hat sich als besonders vorteilhaft herausgestellt, auch die Auslastung des Schneidwerks 2, mittels einer im Einzugsbereich angeordneten Ortungsvorrichtung 7, als tatsächliche Auslastung des Schneidwerks 2 zu messen. Hierdurch lässt sich der Verlauf der Bestandskante 14 bezogen auf die Fahrtrichtung 12 des Mähdreschers 1, vorausschauend an zwei voneinander beabstandeten Stellen abtasten. In Verbindung mit der tatsächlichen Auslastung des Schneidwerks 2 und einer von einer Navigationseinrichtung 5 ermittelten absoluten Position des Schneidwerks 2, können der Bestandskante 14 und quer zur Fahrtrichtung 12 auch der neuen Bearbeitungskante 20, absolute Koordinaten zugeordnet werden.
Die Ortungsvorrichtung 3 ist an der rechten Schneidwerkswand oberhalb der Bestandskante 14 zu dieser hin geneigt angebracht. In der dargestellten Bestandskante 14, 20 wird eine Änderung im Verlauf gezeigt, der einen Übergang von einer Geradeausfahrt in eine Kurvenfahrt des Mähdreschers 1 zur Folge haben muss. Erfindungsgemäß wurde die Ortungsvorrichtung 3 von der Stelleinrichtung mit einem Winkel a gegenüber der Längsachse 26 in Fahrtrichtung 12 des Mähdreschers 1 um die vertikale Achse 11 zur Bestandskante 14 hin verschwenkt, wobei an dem Lenkregler dieser Winkel a als Regelabweichung ansteht, jedoch die Lenkräder 25 noch keine Veränderung der Laufrichtung zur Verfolgung der bevorstehenden Kurvenfahrt anzeigen. Der Lenkregler kann dabei so ausgelegt sein, dass erst dann eine Lenkräderbewegung zugelassen wird, wenn die Ortungsvorrichtung 7 die Einhaltung von Auslastungsgrenzen, die aufgrund der beabsichtigten notwendigen Lenkbewegung überschritten werden könnten, anzeigt.
Der Erfassungsbereich 13 der Ortungsvorrichtung 3 wurde erfindungsgemäß, mit dem mittleren Erfassungsbereich 19 auf die Bestandkante 14 verschwenkt. Der gezeigte Abtaststrahl 4, tastet einen Punkt auf den Stoppeln ab und befindet sich dabei im Tastbereich Stoppeln 15. Dieser Bereich liegt zwischen der rechten Bereichsgrenze 18 und der Bereichsmitte 19. Der Tastbereich Ähren 16 liegt zwischen der Bereichsmitte 19 und der linken Bereichsgrenze 17. Beide Bereiche 15,16 zusammen ergeben in einer Ebene gesehen, den Erfassungsbereich 13 der Ortungsvorrichtung 3. Von der Ortungsvorrichtung 3 wird der Tastbereich Stoppeln 15 von dem Tastbereich Ähren 16 durch unterschiedliche Entfernungen erkannt. Die über den Öffnungswinkel b abgetastete Kontur 27, besitzt im Erfassungsbereich 13 der Ortungsvorrichtung 3, im Tastbereich Stoppeln 15, eine größere Entfernung als im Tastbereich Ähren 16. Die Leitgröße "Bestandskante 14" wird von der Ortungsvorrichtung 3 anhand der sprunghaften Änderung des Entfernungssignals zwischen den Bereichen 15,16 erkannt und von dem Ortungssystem erfindungsgemäß verfolgt. Die absolute Entfernung sowie der Unterschied in den Entfernungen bezüglich der beiden Tastbereiche 15,16 haben keinen Einfluss auf die Bestimmung der Lage der Leitgröße 14.

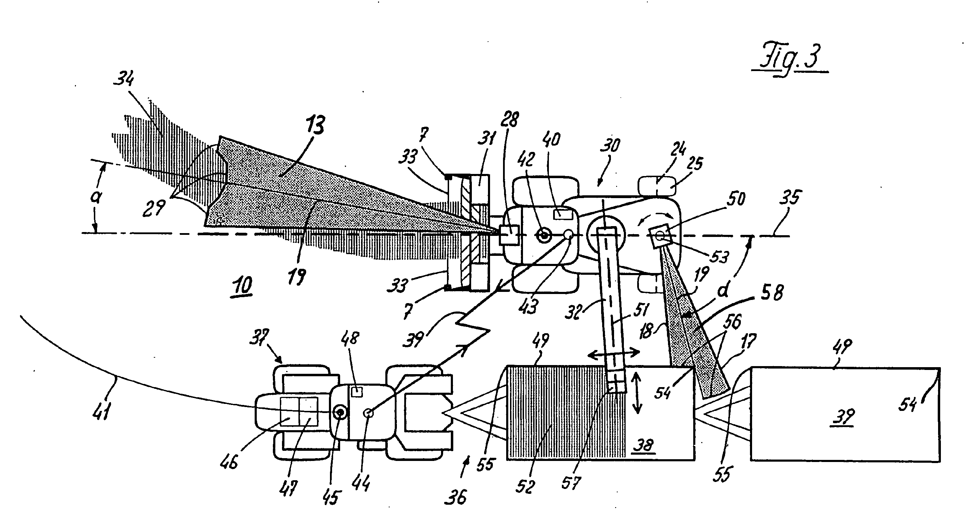

Figur 3 zeigt eine Draufsicht auf einen Feldhäcksler 30 mit zwei daran angeordneten erfindungsgemäßen Ortungssystemen und zwei zugehörige Ortungsvorrichtungen 28,50 und ein parallelfahrendes Transportfahrzeug 36. Der Feldhäcksler 30 nimmt in Fahrtrichtung mit der Pickup 31 auf dem Bearbeitungsfeld 10 in Schwad 34 liegendes Erntegut auf, bearbeitet es und überlädt es dann mittels eines Überladekrümmers 32 auf einen von dem Zugfahrzeug 37 gezogenen Ladebehälter 38,39. Die Entfernung zwischen der Ortungsvorrichtung 28 und dem Schwad 34, wird von der auf der Längsachse 35 des Feldhäckslers 30, an dessen Fahrerkabine fest angeordneten Ortungsvorrichtung 28, vorausschauend mittels eines in einem Erfassungsbereich 13 oszillierend bewegten Abtaststrahls, berührungslos abgetastet. Anhand der ermittelten Kontur 29, wird die Leitgröße, durch die Ermittlung der kürzesten Entfernung zwischen dem Schwad 34 und der Ortungsvorrichtung 28, erkannt und der Erfassungsbereich 13 der Ortungsvorrichtung 28 so von der innerhalb des Gehäuses der Ortungsvorrichtung 28 angebrachten Stelleinrichtung verschwenkt, dass die Leitgröße im mittleren Erfassungsbereich 19 der Ortungsvorrichtung 28 erkannt wird. Die Größe des sich dabei einstellenden Winkels a, zwischen der Längsachse 35 des Feldhäckslers 30 und der Bereichsmitte 19 des Erfassungsbereichs 13, wird einer dem Fachmann bekannten automatischen Lenkeinrichtung zugeführt und von dieser zur Spurführung des Feldhäckslers 30 verwendet.
An der gezeigten Pickup 31 sind im Einzugsbereich beidseitig quer zur Arbeitsrichtung ausgerichtet, zwei Ortungsvorrichtungen 7 anbracht. Diese tasten in einer bestimmten Höhe mit je einem Abtaststrahl 33, jeweils zum in der Regel von der Pickup 31 mittig aufgenommenen Schwad 34, den Abstand zum Schwad 34 ab. Diese Abstände zeigen die Lage des Schwads 34 im Einzugsbereich der Pickup 31 an. Die von den Ortungseinrichtungen 7 und 28 ermittelten voneinander beabstandeten Lagen des Schwads 34, bezüglich des Feldhäckslers 30, können einer auf dem Feldhäcksler 30 vorhanden automatischen Lenkeinrichtung zugeführt werden und ermöglichen eine automatische genaue Verfolgung des Schwads 34. Dabei dient die Ortungsvorrichtung 28 zur vorausschauenden und die Ortungsvorrichtung 7 zur nahen Ortung der Lage des Schwades 34.
Auf dem Kabinendach des Feldhäckslers 30 ist weiterhin eine Navigationsantenne 42 angeordnet. Die absolute Position des Feldhäckslers 30 bezüglich des Bearbeitungsfeldes 10 kann hiermit ermittelt werden. Die einzelnen Positionen zeigen im Verlauf die Fahrspur des Feldhäckslers 30 an und können in einem Speicher angespeichert werden. Erfindungsgemäß können die von der Ortungseinrichtung 28,7 erfassten Lagen des Schwades 34, den navigierten Positionen des Feldhäckslers 30 zugeordnet abgespeichert werden. Aus der bekannten Entfernung, zwischen der Navigationsantenne 42 und der Ortungsvorrichtung 30 an dem Feldhäcksler 30, der absoluten Ausrichtung der Längsachse 35 bezogen auf das Bearbeitungsfeld 10, dem Winkel a und der Entfernung zwischen der Kontur 29 und der Ortungsvorrichtung 28, lässt sich erfindungsgemäß, die absolute Position des Schwades 34 vorausschauend ermitteln. Eine vorteilhafte Spurführung des Feldhäckslers 30 anhand der aufgezeichneten absoluten Lage des Schwades 34, in Verbindung mit der aktuellen navigierten Position des Feldhäckslers 30 auf dem Bearbeitungsfeld 10, lässt sich hiermit erfindungsgemäß durchführen. Auch die Lage des Schwades 34 im Einzugsbereich der Pickup 31 des Feldhäckslers 30 kann in bezug auf die navigierte Position des Feldhäckslers 30 berechnet und direkt zur Spurführung verwendet oder hierfür in eine Speichereinrichtung hinterlegt werden.
Auf dem Feldhäcksler 30 ist weiterhin ein Routenplanungssystem 40 installiert. Dieses kann eine Fahrtroute für den Feldhäcksler 30 erzeugen und erfindungsgemäß auch die Steuerung der Fahrtroute 41 für das Transportfahrzeug 36 übernehmen. Das Zugfahrzeug 37 ist hierzu mit einer Vorfahrtsteuerung 46 und einer Lenksteuerung 47 ausgestattet. Diese Steuerungen 46,47 sind mittels einer Datenübertragungsstrecke 39 mit dem Routenplanungssystem 40 verbunden. Hierzu besitzen der Feldhäcksler 30 und das Zugfahrzeug 37 jeweils beispielsweise eine Funksende- und -empfangseinrichtung sowie zugehörige Funkantennen 43,44. Erfindungsgemäß wird aus der ermittelten absoluten Lage des Schwades 34, von dem Routenplanungssystem 40, ein Lenkwinkel und eine Fahrgeschwindigkeit für das Zugfahrzeug 37 so ermittelt und an die Steuerungen 46,47 übertragen, dass eine sicher Überladung von Erntegut auf die Ladebehälter 38,39 erfolgen kann. Auf dem Zugfahrzeug 37 befindet sich zur Ermittlung der absoluten Position auf dem Bearbeitungsfeld 10 hierzu eine Navigationsantenne 44. Ferner kann die Fahrtroute 41 für das Transportfahrzeug 36, durch die Übertragung einer absoluten Fahrtroute 41 bezüglich des Bearbeitungsfeldes 10 von dem Routenplanungssystem 40 vorgegeben werden. Eine Spurführung des Transportfahrzeuges 36, entlang des Schwades 34 in Verbindung mit der Position des Feldhäckslers 30, kann auch von einer Einrichtung auf dem Zugfahrzeug 37 selbsttätig durchgeführt werden. Die aktuelle Position des Feldhäckslers 30 und die ermittelte Lage des Schwades 34, wird dann hierfür an das Zugfahrzeug 37 übermittelt. Der Bediener des Zugfahrzeugs 37 kann mittels einer Bedieneinrichtung 48 die automatische Spurführung des Transportfahrzeuges 36 bedienen beziehungsweise zumindest überwachen.
An dem in der Figur 3 dargestellten Feldhäcksler 30 ist eine weitere Ortungsvorrichtung 50, zur Erfassung einer relativen Lage des Ladebehälters 38,39 bezüglich des Feldhäckslers 30 befestigt. Diese Ortungsvorrichtung 50 ist im Heckbereich auf der Längsachse 35 des Feldhäckslers 30 um eine vertikale Achse 53 schwenkbar befestigt. Der Erfassungsbereich 13 dieser Ortungsvorrichtung 50 kann daher um annähernd 360° zur Findung und Verfolgung einer Leitgröße von einer Stelleinrichtung verschwenkt werden. Hierdurch lassen sich Leitgrößen links, rechts neben oder hinter dem Feldhäcksler 30 erfindungsgemäß abtasten. Eine als Laserreflexortungsvorrichtung ausgebildete Ortungsvorrichtung 50 wird hier verwendet, wobei der Erfassungsbereich 58 auf eine senkrecht stehende hintere Ladebehälterkante 54 ausgerichtet dargestellt wird. Von einem in einer Ebene oszillierend verschwenkten Laserstrahl, werden bei unterschiedlichen Schwenkwinkeln bezüglich der Ortungsvorrichtung 50, Abstandswerte aus der Laufzeit eines gesendeten und empfangenen Laserimpulses zwischen der Ortungsvorrichtung 50 und der abgetasteten Kontur 56 in Verbindung mit dem Schwenkwinkel ermittelt. Befindet sich im Erfassungsbereich 58 eine Ladebehälterkante 54,55 so wird diese anhand eines Entfernungssprungs in der abgetasteten Kontur 56, von der Ortungsvorrichtung 50 erkannt und als Leitgröße definiert. Erfindungsgemäß richtet das Ortungssystem die Ortungsvorrichtung 50 so mittels der Stellvorrichtung an dem Feldhäcksler 30 aus, dass die erkannte Ladebehälterkante 54,55 im mittleren Erfassungsbereich 19 des Erfassungsbereichs 58 der Ortungsvorrichtung 3 erfasst wird. Die von dem Ortungssystem erkannte Lage der Leitgröße 54 wird erfindungsgemäß zur Steuerung der Einstellung des Überladekrümmers 32 verwendet. Der Überladekrümmer 32 kann von dem Bediener des Feldhäckslers 30 ferngesteuert um eine vertikale Drehachse geschwenkt werden, so dass unterschiedliche Winkel zwischen der Längsachse 35 des Feldhäckslers 30 und der Längsachse 51 des Überladekrümmers 32 eingestellt werden können. Somit kann eine Überladung von Erntegut auf Ladebehältern 38,39 erfolgen, die sich rechts, links neben oder hinter dem Feldhäcksler 30 befinden. Die relative Ausrichtung der Ortungsvorrichtung 50 an dem Feldhäcksler 30, insbesondere der Winkel d, wird erfindungsgemäß zur Einstellung der Ausrichtung der Längsachse 51 des Überladekrümmers 32 gegenüber der als Nulllage definierten Längsachse 51 des Feldhäckslers 30 für eine automatische Steuerung des Überladekrümmers 32 verwendet.
An der gutabgebenden Seite des Überladekrümmers 32, ist wenigstens eine Überladeklappe 57 angebracht, die um eine annähernd horizontale und quer zur Längsachse 51 liegende Achse ferngesteuert verschwenkt werden kann. Hiermit kann die relative Abgaberichtung des Emtegutes und in Verbindung damit auch die Überladeweite in Richtung der Längsachse 51 gesteuert werden. Aus der von der Ortungsvorrichtung 50 erkannten relativen Lage der Ladebehälterkante 54,55 zum Feldhäcksler 30 hin, kann beispielsweise anhand des an der rechten Bereichsgrenze 18 vorhandenen Entfernungssignals, der Abstand zwischen dem Feldhäcksler 30 und der Ladebehälterwand 49 ermittelt werden. Dieser Abstand wird erfindungsgemäß zur Steuerung der Überladeklappe 57 verwendet. Bewegt sich nun das Transportfahrzeug 36 relativ zum Feldhäcksler 30 auf dem Bearbeitungsfeld 10, wird erfindungsgemäß die Einstellung des Überladekrümmers 32 entsprechend der Bewegung so verändert, dass das Erntegut in etwa auf die gleiche Stelle im Ladebehälter 38,39 überladen wird.
Die jeweilige Einstellung des Überladekrümmers 32 wird von Sensoren erfasst und in einer Einrichtung mit den Signalen der Ortungsvorrichtung 50 in Beziehung gesetzt. Diese Einrichtung kann weiterhin mit den Bedienelementen für eine manuelle Steuerung des Überladekrümmers 32 in Verbindung stehen und ferner auch Stellsignale für die Einstellung des Ortungssystems liefern. So wird beispielsweise der Erfassungsbereich 58 der Ortungsvorrichtung 50 zu Beginn einer automatischen Steuerung in einem Initialisierungsschritt automatisch in Verbindung mit der von dem Bediener gewählten Überladerichtung parallel zur Längsachse 51 des Überladekrümmers 32 ausgerichtet. Nachfolgend sucht das Ortungssystem anhand der abgetasteten Kontur 56 eine Ladebehälterkante 54,55, indem die Stelleinrichtung den Winkel d über einen größeren Bereich so lange verstellt, bis der erforderliche Entfernungssprung in der Kontur 56 erkannt wird. Anschließend wird der hierbei auftretende Winkel d und der ermittelte Abstand, der aktuellen Einstellung des Überladekrümmers 32 als Basisausrichtung zugeordnet und eine erfindungsgemäße, hiervon abhängige automatische Steuerung des Überladekrümmers 32 gestartet, wobei der Erfassungsbereich 58 der Ortungsvorrichtung 50 erfindungsgemäß mittels einer Stelleinrichtung der Ladebehälterkante 54,55 nachgeführt wird. Die automatische Steuerung gleicht nun die relativen Bewegungen zwischen dem Feldhäcksler 30 und dem Transportfahrzeug 36 automatisch aus, wobei eine manuell erzeugte Übersteuerung der Einstellung des Überladekrümmers 32, beispielsweise durch den Bediener, die automatische Steuerung nur während der manuellen Verstellung unterbricht, die neue Einstellung des Überladekrümmers 32 automatisch in eine korrigierte neue Basisausrichtung überführt und dann weiter ausgeführt wird.
Das Ortungssystem kann aus den einzelnen Entfernungswerten und insbesondere aus den Werten an den Bereichsgrenzen 17 und 18 erkennen, ob es sich bei der gefunden Ladebehälterkante 54,55 um eine hintere Ladebehälterkante 54 oder eine vordere Ladebehälterkante 55 handelt. In der gezeigten Ausrichtung des Erfassungsbereiches 58 wird durch das kürzere Entfernungssignal an der rechten Bereichsgrenze 18 gegenüber dem Entfernungssignal an der linken Bereichsgrenze 17 eine hintere Ladebehälterkante 54 erkannt. Der gezeigte Ladebehälter 38 ist schon zum Teil im vorderen Bereich mit Erntegut 52 befüllt, so dass die weitere Befüllung nur im hinteren Teil des Ladebehälters 38 fortgeführt werden kann. Es hat sich als besonders vorteilhaft herausgestellt, bei der Befüllung des vorderen Bereiches des Ladebehälters 38,39 eine vordere Ladebehälterkante 55 und bei einer Befüllung im hinteren Teil des Ladebehälters 38,39, die hintere Ladebehälterkante 54 anzuvisieren. Ein Wechsel kann von einem Bediener manuell gesteuert, aktiviert oder auch in Abhängigkeit des Winkels d automatisch vorgenommen werden. Gelangt beispielsweise die Ortungsvorrichtung 50 bei der erfindungsgemäßen Verfolgung der vorderen Ladebehälterkante 55 in die Nähe eines Stell-Anschlags, wird automatisch die erfindungsgemäße Steuerung des Überladekrümmers 32 unterbrochen, nach einer hinteren Ladebehälterkante 54 gesucht, die neue Basisausrichtung der Ortungsvorrichtung 50 zwischen der Ladebehälterkante 54 und der Einstellung des Überladekrümmers 32 korrigiert zugeordnet und die automatische Steuerung wieder aufgenommen.
Während der Suche eines Ladebehälters 38,39 oder einer Ladebehälterkante 54,55 kann die Abtastentfernung beziehungsweise auch die Breite des Erfassungsbereich 58 erfindungsgemäß variiert werden, um zunächst durch die Abtastung eines größeren Bereiches, zu einer raschen Findung eines Ladebehälters 38,39 oder einer Ladebehälterkante 54,55 zu gelangen. Nachdem ein Ladebehälter 38,39 beziehungsweise eine Ladebehälterkante 54,55 gefunden wurde, kann der Erfassungsbereich entsprechend der Lage erfindungsgemäß eingeschränkt und entsprechend nachgeführt werden. Diese Anpassung erfolgt vorteilhaft adaptiv.
Die Ortungsvorrichtung 50 und/oder die zu erfassende Leitgröße kann ferner mit einer Navigationsantenne 42 in Verbindung gebracht werden. Anhand der aktuellen Position 45 des Transportfahrzeuges 36 kann dann die absolute Lage der Leitgröße insbesondere die ungefähre Lage einer Ladebehälterkante 54,55 bestimmt werden und so durch einen bestimmten Suchbereich eine schnellere Findung der Leitgröße von dem Ortungssystem herbeigeführt werden.

Es liegt im Ermessen eines Fachmanns die einzelnen genannten Ausführungsbeispiele auch beliebig zu kombinieren und so zu weiteren vorteilhaften Ausgestaltungen der Erfindung zu gelangen. So lassen sich beispielsweise aus der Kombination des Ortungssystems für die Spurführung mit dem Ortungssystem für die Überladekümmersteuerung, weitere Lösungen zur Generierung einer Fahrtroute 41 für eine Arbeitsmaschine und/oder ein Arbeitsfahrzeug 36 beziehungsweise zur Steuerung eines Überladekrümmers 32 ableiten. Auch die Einbeziehung einer navigierten Position der Ortungsvorrichtung 3,7,28,50 liegt im Ermessen eines Fachmanns.

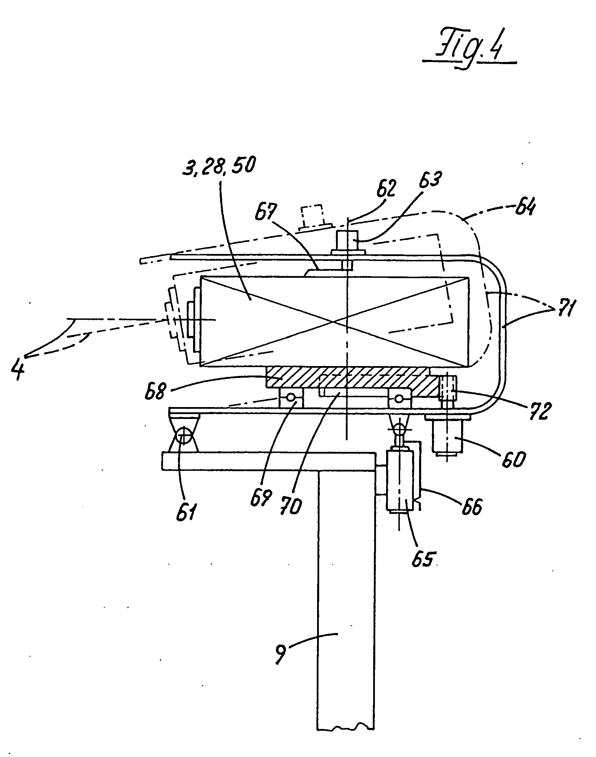

Figur 4 zeigt eine Seitenansicht einer an einem Halterohr 9 um eine vertikal Achse 62 und horizontale Achse 61 schwenkbare Ortungsvorrichtung 3,28,50. Die Ortungsvorrichtung 3,28,50 ist auf einem Drehkranz 68 und einer koaxial zur vertikalen Achse 62 angeordneten Lagerung 69 innerhalb eines Schutzgehäuses 71 angeordnet dargestellt. Der Drehkranz 68 besitzt umfangsseitig zumindest bereichsweise eine aufgesetzte Verzahnung 70, in die ein von einem Stellmotor 60 angetriebenes Zahnrad 72 eingreift. Der Stellmotor 60 ist an dem Schutzgehäuse 71 angelenkt und ermöglicht eine ferngesteuerte Verschenkung der Ortungsvorrichtung 3,28,50 um die vertikale Achse 62 bezüglich des Schutzgehäuses 71 beziehungsweise des Halterohrs 9. Durch diesen Schwenkantrieb 60,68,69,70,72 kann der Erfassungsbereich 13,58 der Ortungseinrichtung 3,28,50 erfindungsgemäß einer Leitgröße 14,34,54,55 nachgeführt werden. In dem Schutzgehäuse 71, ist von dem Schutzgehäuse 71 axial zur vertikalen Achse 62 ausgerichtet gehalten, ein Sensor 63 angebracht, der mittels eines Hebels 67, die Verschwenkung der Ortungsvorrichtung 3,28,50 bezüglich des Halterohrs 9 erfasst. An dem Halterohr 9 ist ein weiterer Stellmotor 65 angelenkt, mittels welchem das gesamte Schutzgehäuse 71 um die horizontale Achse 61 verschwenkt werden kann. Hierdurch wird eine Einstellung der Neigung des Abtaststrahls 4 beispielsweise zu einer Bestandskante 14 hin oder eine Anpassung einer fahrgeschwindigkeitsabhängigen Einstellung der Abtastentfernung möglich. Eine veränderte Neigung wird durch die strichpunktlinienartige Darstellung 64 angezeigt. Die relative Ausrichtung der Ortungsvorrichtung 3,28,50 wird durch einen Lagesensor 66, der den Stellweg des Stellmotors 65 ermittelt, erfasst.
Die Steuerung der Stellmotoren 60,65 und die Auswertung der Sensorsignale der Sensoren 63,66 wird von nicht näher dargestellten, innerhalb der Ortungsvorrichtung 3,28,50 angeordneten Einrichtungen vorgenommen. Ferner können auch die Achsen 61,63 innerhalb der Ortungsvorrichtung 3,28,50 angeordnet und der Erfassungsbereich 13,58 der Ortungsvorrichtung 3,28,50 durch dort vorhandene Stelleinrichtungen, der Leitgröße 14,34,54,55 erfindungsgemäß nachgeführt werden.

Die beschriebenen Ausführungsbeispiele zeigen besonders vorteilhafte Anwendungen des erfindungsgemäßen Ortungssystems, wobei die Erfindung nicht auf diese beschränkt ist. Der Einsatz des Ortungssystems an weiteren bekannten landwirtschaftlich eingesetzten Arbeitsmaschinen, wie beispielsweise einem Traktor, einem Arbeitsfahrzeug oder einem Zugfahrzeug 37, zur Ortung und/oder automatischen Verfolgung einer Leitgröße, wie beispielsweise einer Bestandskante 14,20, einer von einem Spuranreißer erzeugten Spur, einem Schwad 34, einer Pflugfurche, einer Fahrgasse oder einer andersgearteten Bearbeitungskante, liegt im Ermessen des Fachmanns und wird von der Erfindung mit erfasst. Ferner lässt sich das Ortungssystem auch an einem Bearbeitungsgerät, wie beispielsweise einem Pflug einsetzen und zur Einstellung des Bearbeitungsgerätes und/oder zur Spurführung des Bearbeitungsgerätes und/oder des entsprechenden Zugfahrzeuges 37 verwenden.

### Bezugszeichenliste:

- 1.: Mähdrescher
- 2.: Schneidwerk
- 3.: Ortungsvorrichtung
- 4.: Abtaststrahl
- 5.: Navigationsantenne
- 6.: Bestand
- 7.: Ortungsvorrichtung
- 8.: Hubzylinder
- 9.: Halterohr
- 10.: Bearbeitungsfeld
- 11.: vertikale Achse
- 12.: Fahrtrichtung
- 13.: Erfassungsbereich
- 14.: Bestandskante
- 15.: Tastbereich Stoppeln
- 16.: Tastbereich Ähren
- 17.: linke Bereichsgrenze
- 18.: rechte Bereichsgrenze
- 19.: mittlerer Erfassungsbereich
- 20.: Bearbeitungskante
- 22.: Halmteiler
- 23.: Haltearm
- 24.: Lenkachse
- 25.: Lenkräder
- 26.: Längsachse
- 27.: abgetastete Kontur
- 28.: Ortungsvorrichtung
- 29.: Schwadkontur
- 30.: Feldhäcksler
- 31.: Pickup
- 32.: Überladekrümmer
- 33.: Abtastsignal
- 34.: Schwad
- 35.: Längsachse
- 36.: Transportfahrzeug
- 37.: Zugfahrzeug
- 38.: Ladebehälter
- 39.: Ladebehälter
- 40.: Routenplanungssystem
- 41.: Fahrtroute
- 42.: Navigationsantenne
- 43.: Antenne
- 44.: Antenne
- 45.: Navigationsantenne
- 46.: Vorfahrtsteuerung
- 47.: Lenksteuerung
- 48.: Bedieneinrichtung
- 49.: Ladebehälterwand
- 50.: Ortungsvorrichtung
- 51.: Längsachse Überladekrümmer
- 52.: überladenes Erntegut
- 53.: vertikale Achse
- 54.: hintere Ladebehälterkante
- 55.: vordere Ladebehälterkante
- 56.: abgetastete Kontur
- 57.: Überladeklappe
- 58.: Erfassungsbereich
- 60.: Stellmotor
- 61.: horizontale Achse
- 62.: vertikale Achse
- 63.: Sensor
- 64.: geneigte Stellung
- 65.: Stellmotor
- 66.: Lagesensor
- 67.: Hebel
- 68.: Drehkranz
- 69.: Lagerung
- 70.: Verzahnung
- 71.: Schutzgehäuse
- 72.: Zahnrad

## Patentansprüche

1. Ortungssystem an einer selbstfahrenden landwirtschaftlichen Arbeitsmaschine, wie beispielsweise Mähdrescher (1), Feldhäcksler (30) oder Zugfahrzeug (37), mit wenigstens einer berührungslos arbeitenden Ortungsvorrichtung (3,7,28,50) und mit wenigstens einer Stelleinrichtung (60,65), zur Verstellung der Ausrichtung der Ortungsvorrichtung (3,28,50) gegenüber der Arbeitsmaschine (1,30,37),
**dadurch gekennzeichnet, dass**
die Ortungsvorrichtung (3,28,50) einen die Leitgröße (14,34,54,55) beinhaltenden Erfassungsbereich (13,58) sensiert und die Lage des Erfassungsbereichs (13,58) gegenüber der Arbeitsmaschine (1,30,37) änderbar ist und die Änderungen in Abhängigkeit von der Änderung der Leitgröße (14,34,54,55) erfolgt, wobei während dem Arbeitsbetrieb der landwirtschaftlichen Arbeitsmaschine eine sich veränderte Lage der Leitgröße (14,34,54,55) eine Nachführung des Erfassungsbereichs (13,58) der Ortungsvorrichtung (3,28,50) bewirkt.

2. Ortungssystem nach Anspruch 1,
**dadurch gekennzeichnet, dass**
der Erfassungsbereich (13,58) von einem in einer Ebene zwischen zwei Bereichsgrenzen (17,18) verschwenkbaren Abtaststrahl (4) oder von einem flächig abtastenden Strahlenbündel gebildet wird.

3. Ortungssystem nach wenigstens einem der Ansprüche 1 oder 2,
**dadurch gekennzeichnet, dass**
der Erfassungsbereich (13,58) der Ortungsvorrichtung (3,28,50) nur dann von zumindest einer Stelleinrichtung (60,65) gegenüber der Arbeitsmaschine (1,30,37) erneut ausgerichtet wird, wenn sich die erfasste Leitgröße (14,34,54,55) an die Bereichsgrenze (17,18) des Erfassungsbereichs (13,58) der Ortungsvorrichtung (3,28,50) bewegt.

4. Ortungssystem nach wenigstens einem der Ansprüche 1 bis 3,
**dadurch gekennzeichnet, dass**
der mittlere Erfassungsbereich (19) der Ortungsvorrichtung (3,28,50), mittels zumindest einer Stelleinrichtung (60,65), auf die Leitgröße (14,34,54,55) automatisch ausgerichtet wird.

5. Ortungssystem nach wenigstens einem der Ansprüche 1 bis 4,
**dadurch gekennzeichnet, dass**
die Ortungsvorrichtung (3,28,50) an der Arbeitsmaschine (1,30,37) mittels der zumindest einen Stelleinrichtung (60) um wenigstens eine annähernd vertikale Achse (11,53,62) gegenüber der Arbeitsmaschine (1,30,37) schwenkbar angeordnet ist.

6. Ortungssystem nach wenigstens einem der Ansprüche 1 bis 5,
**dadurch gekennzeichnet, dass**
die Leitgröße beispielsweise eine Bestandskante (14) und/oder ein Schwad (34) und/oder eine Furche und/oder eine Ladebehälterkante (54,55) ist.

7. Ortungssystem nach wenigstens einem der Ansprüche 1 bis 6,
**dadurch gekennzeichnet, dass**
die von der Ortungsvorrichtung (3,7,28,50) erfasste Lage der Leitgröße (14,34,54,55) gegenüber der Ortungsvorrichtung (3,7,28,50) und/oder die Ausrichtung der Ortungsvorrichtung (3,7,28,50) gegenüber der Arbeitsmaschine (1,30,37) bei der Einstellung wenigstens eines Parameters der Arbeitsmaschine (1,30,37) berücksichtigt wird.

8. Ortungssystem nach wenigstens einem der Ansprüche 1 bis 7,
**dadurch gekennzeichnet, dass**
die Ausrichtung der Ortungsvorrichtung (3,28,50), insbesondere der vertikale Winkel (a,d) gegenüber der Arbeitsmaschine (1,30,37) zur automatischen Spurführung der Arbeitsmaschine (1,30,37) verwendet wird.

9. Ortungssystem nach wenigstens einem der Ansprüche 1 bis 8,
**dadurch gekennzeichnet, dass**
zusätzlich die von der Ortungsvorrichtung (3,28,50) erfasste Lage der Leitgröße (14,34,54,55) gegenüber der Ortungsvorrichtung (3,28,50) zur automatischen Spurführung der Arbeitsmaschine (1,30,37) verwendet wird.

10. Ortungssystem nach wenigstens einem der Ansprüche 1 bis 9,
**dadurch gekennzeichnet, dass**
die Ausrichtung der Arbeitsmaschine (1,30,37) bezüglich der Leitgröße (14,34,54,55) im Einzugsbereich der Arbeitsmaschine (1,30,37) von wenigstens einer weiteren Ortungsvorrichtung (7) erfasst und zusätzlich bei der automatischen Spurführung mit berücksichtigt wird.

11. Ortungssystem nach wenigstens einem der Ansprüche 1 bis 10,
**dadurch gekennzeichnet dass,**
die Ausrichtung der Ortungsvorrichtung (3,28,50), insbesondere der Winkel (a,d) gegenüber der Arbeitsmaschine (1,30,37), bei einer automatischen Steuerung, wenigstens einer Einstellgröße eines Überladekrümmers (32) an einer Arbeitsmaschine (30), wie beispielsweise die Überladerichtung (51), berücksichtigt wird.

12. Ortungssystem nach wenigstens einem der Ansprüche 1 bis 11,
**dadurch gekennzeichnet, dass**
die Ausrichtung der Ortungsvorrichtung (3,28,50), insbesondere der vertikale Stellwinkel (a,d), gegenüber der Arbeitsmaschine (1,30,37), zur automatischen Koordination eines Arbeitsfahrzeugs (36) verwendet wird.

13. Ortungssystem nach wenigstens einem der Ansprüche 1 bis 12,
**dadurch gekennzeichnet, dass**
die Ortungsvorrichtung (3,7,28,50) mit einer Navigationsantenne (5) ausgestattet ist.

14. Ortungssystem nach wenigstens einem der Ansprüche 1 bis 13,
**dadurch gekennzeichnet, dass**
die von der Ortungsvorrichtung (3,7,28,50) erfasste Lage der Leitgröße (14,34,54,55) gegenüber der Ortungsvorrichtung (3,7,28,50) und die Ausrichtung der Ortungsvorrichtung (3,7,28,50) gegenüber der Arbeitsmaschine (1,30,37), in Verbindung mit der von der Navigationsantenne (5) ermittelten Position der Ortungsvorrichtung (3,7,28,50), in wenigstens einer Einrichtung zur Planung (40) und/oder Steuerung (46,47) entlang einer Fahrtroute (41) für die Arbeitsmaschine (1,30,37) und/oder eines Arbeitsfahrzeugs (36) verwendet wird.

15. Ortungssystem nach wenigstens einem der Ansprüche 1 bis 14,
**dadurch gekennzeichnet, dass**
die Bezugsausrichtung des Erfassungsbereichs (13,58) der Ortungsvorrichtung (3,28,50) von wenigstens einer Einstellung der Arbeitsmaschine (1,30,37) abhängig vorgegeben wird.

16. Ortungssystem nach wenigstens einem der Ansprüche 1 bis 15,
**dadurch gekennzeichnet, dass**
der Erfassungsbereich (13,58) der Ortungsvorrichtung (3,28,50) in Verbindung mit der zu ortenden Leitgröße (14,34,54,55) an diese angepasst werden kann.

## Claims

1. A position-finding system on a self-propelled agricultural working machine such as for example a combine harvester (1), a forage harvester (30) or a tractor vehicle (37), having at least one contactlessly operating position-finding device (3, 7, 28, 50) and at least one adjusting device (60, 65) for adjusting the orientation of the position-finding device (3, 28, 50) with respect to the working machine (1, 30, 37),
**characterised in that**
the position-finding device (3, 28, 50) senses a coverage region (13, 58) including the control parameter (14, 34, 54, 55) and the position of the coverage region (13, 58) can be changed in relation to the working machine (1, 30, 37) and the change is made in dependence on the change in the control parameter (14, 34, 54, 55), wherein during the working operation of the agricultural working machine a changed position of the control parameter (14, 34, 54, 55) provides for tracking adjustment of the coverage region (13, 58) of the position-finding device (3, 28, 50).

2. A position-finding system according to claim 1 **characterised in that** the coverage region (13, 58) is formed by a scanning beam (4) pivotable in a plane between two region boundaries (17, 18) or by an areally scanning beam.

3. A position-finding system according to at least one of claims 1 and 2 **characterised in that** the coverage region (13, 58) of the position-finding device (3, 28, 50) is re-oriented with respect to the working machine (1, 30, 37) by at least one adjusting device (60, 65) only when the detected control parameter (14, 34, 54, 55) moves to the region boundary (17, 18) of the coverage region (13, 58) of the position-finding device (3, 28, 50).

4. A position-finding system according to at least one of claims 1 to 3 **characterised in that** the central coverage region (19) of the position-finding device (3, 28, 50) is automatically oriented to the control parameter (14, 34, 54, 55) by means of at least one adjusting device (60, 65).

5. A position-finding system according to at least one of claims 1 to 4 **characterised in that** the position-finding device (3, 28, 50) is arranged on the working machine (1, 30, 37) pivotably with respect to the working machine (1, 30, 37) about at least one proximally vertical axis (11, 53, 62) by means of the at least one adjusting device (60).

6. A position-finding system according to at least one of claims 1 to 5 **characterised in that** the control parameter is for example a crop stand edge (14) and/or a swathe (34) and/or a furrow and/or a loading container edge (54, 55).

7. A position-finding system according to at least one of claims 1 to 6 **characterised in that** the position of the control parameter (14, 34, 54, 55) which is detected by the position-finding device (3, 7, 28, 50) with respect to the position-finding device (3, 7, 28, 50) and/or the orientation of the position-finding device (3, 7, 28, 50) with respect to the working machine (1, 30, 37) is taken into consideration when adjusting at least one parameter of the working machine (1, 30, 37).

8. A position-finding system according to at least one of claims 1 to 7 **characterised in that** the orientation of the position-finding device (3, 28, 50), in particular the vertical angle (a, d) with respect to the working machine (1, 30, 37) is used for automatic track guidance of the working machine (1, 30, 37).

9. A position-finding system according to at least one of claims 1 to 8 **characterised in that** in addition the position of the control parameter (14, 34, 54, 55), which is detected by the position-finding device (3, 28, 50), with respect to the position-finding device (3, 28, 50) is used for automatic track guidance of the working machine (1, 30, 37).

10. A position-finding system according to at least one of claims 1 to 9 **characterised in that** the orientation of the working machine (1, 30, 37) with respect to the control parameter (14, 34, 54, 55) in the intake region of the working machine (1, 30, 37) is detected by at least one further position-finding device (7) and additionally taken into account in automatic track guidance.

11. A position-finding system according to at least one of claims 1 to 10 **characterised in that** the orientation of the position-finding device (3, 28, 50), in particular the angle (a, d), with respect to the working machine (1, 30, 37) is taken into account in automatic control of at least one adjusting variable of a curved transfer pipe (32) on a working machine (30) such as for example the transfer device (51).

12. A position-finding system according to at least one of claims 1 to 11 **characterised in that** the orientation of the position-finding device (3, 28, 50), in particular the vertical adjustment angle (a, d) with respect to the working machine (1, 30, 37), is used for automatic co-ordination of a working vehicle (36).

13. A position-finding system according to at least one of claims 1 to 12 **characterised in that** the position-finding device (3, 7, 28, 50) is equipped with a navigation antenna (5).

14. A position-finding system according to at least one of claims 1 to 13 **characterised in that** the position of the control parameter (14, 34, 54, 55), detected by the position-finding device (3, 7, 28, 50), with respect to position-finding device (3, 7, 28, 50) and the orientation of the position-finding device (3, 7, 28, 50) with respect to the working machine (1, 30, 37) in conjunction with the position of the position-finding device (3, 7, 28, 50), ascertained by the navigation antenna (5), is used in at least one device for planning (40) and/or control (46, 47) along a travel route (41) for the working machine (1, 30, 37) and/or a working vehicle (36).

15. A position-finding system according to at least one of claims 1 to 14 **characterised in that** the reference orientation of the coverage region (13, 58) of the position-finding device (3, 28, 50) is predetermined in dependent relationship on at least one adjustment of the working machine (1, 30, 37).

16. A position-finding system according to at least one of claims 1 to 15 **characterised in that** the coverage region (13, 58) of the position-finding device (3, 28, 50) in conjunction with the control parameter (14, 34, 54, 55) to be located can be adapted thereto.

## Revendications

1. Système de localisation sur une machine de travail agricole automotrice, comme par exemple une moissonneuse-batteuse (1), une ensileuse (30) ou un tracteur (37), comprenant au moins un dispositif de localisation (3, 7, 28, 50) fonctionnant sans contact et au moins un dispositif de réglage (60, 65) pour régler l'orientation du dispositif de localisation (3, 28, 50) par rapport à la machine de travail (1, 30, 37), **caractérisé en ce que** le dispositif de localisation (3, 28, 50) analyse une zone de couverture (13, 58) contenant la grandeur de guidage (14, 34, 54, 55) et la position de la zone de couverture (13, 58) par rapport à la machine de travail (1, 30, 37) est modifiable, la modification dépendant de la modification de la grandeur de guidage (14, 34, 54, 55), une modification de position de la grandeur de guidage (14, 34, 54, 55) pendant le mode de travail de la machine de travail agricole entraînant un réajustement de la zone de couverture (13, 58) du dispositif de localisation (3, 28, 50).

2. Système de localisation selon la revendication 1, **caractérisé en ce que** la zone de couverture (13, 58) est formée par un rayon de balayage (4) pivotant dans un plan entre deux limites de zone (17, 18) ou par un faisceau de rayons effectuant un balayage planaire.

3. Système de localisation selon au moins une des revendications 1 ou 2, **caractérisé en ce que** la zone de couverture (13, 58) du dispositif de localisation (3, 28, 50) n'est réorientée par ledit au moins un dispositif de réglage (60, 65) par rapport à la machine de travail (1, 30, 37) que si la grandeur de guidage (14, 34, 54, 55) détectée se déplace vers la limite de zone (17, 18) de la zone de couverture (13, 58) du dispositif de localisation (3, 28, 50).

4. Système de localisation selon au moins une des revendications 1 à 3, **caractérisé en ce que** la zone de couverture centrale (19) du dispositif de localisation (3, 28, 50) est orientée automatiquement vers la grandeur de guidage (14, 34, 54, 55) au moyen d'au moins un dispositif de réglage (60, 65).

5. Système de localisation selon au moins une des revendications 1 à 4, **caractérisé en ce que** le dispositif de localisation (3, 28, 50) est disposé sur la machine de travail (1, 30, 37) de manière à pouvoir pivoter par rapport à la machine de travail (1, 30, 37) autour d'au moins un axe approximativement vertical (11, 53, 62) au moyen dudit au moins un dispositif de réglage (60).

6. Système de localisation selon au moins une des revendications 1 à 5, **caractérisé en ce que** la grandeur de guidage est, par exemple, un bord de récolte (14) et/ou un andain (34) et/ou un sillon et/ou un bord de réservoir de chargement (54, 55).

7. Système de localisation selon au moins une des revendications 1 à 6, **caractérisé en ce que** la position de la grandeur de guidage (14, 34, 54, 55) par rapport au dispositif de localisation (3, 7, 28, 50) détectée par le dispositif de localisation (3, 7, 28, 50) et/ou l'orientation du dispositif de localisation (3, 7, 28, 50) par rapport à la machine de travail (1, 30, 37) sont prises en compte lors du réglage d'au moins un paramètre de la machine de travail (1, 30, 37).

8. Système de localisation selon au moins une des revendications 1 à 7, **caractérisé en ce que** l'orientation du dispositif de localisation (3, 28, 50), en particulier l'angle vertical (a, d) par rapport à la machine de travail (1, 30, 37), sont utilisés pour le guidage automatique de la machine de travail (1, 30, 37).

9. Système de localisation selon au moins une des revendications 1 à 8, **caractérisé en ce que** la position de la grandeur de guidage (14, 34, 54, 55) par rapport au dispositif de localisation (3, 28, 50) détectée par le dispositif de localisation (3, 28, 50) est utilisée en plus pour le guidage automatique de la machine de travail (1, 30, 37).

10. Système de localisation selon au moins une des revendications 1 à 9, **caractérisé en ce que** l'orientation de la machine de travail (1, 30, 37) par rapport à la grandeur de guidage (14, 34, 54, 55) dans la zone d'alimentation de la machine de travail (1, 30, 37) est détectée par au moins un autre dispositif de localisation (7) et également prise en compte pour le guidage automatique.

11. Système de localisation selon au moins une des revendications 1 à 10, **caractérisé en ce que** l'orientation du dispositif de localisation (3, 28, 50), en particulier l'angle (a, d) par rapport à la machine de travail (1, 30, 37), sont pris en compte dans une commande automatique d'au moins une grandeur de réglage d'une goulotte de déchargement (32) sur une machine de travail (30), comme par exemple de la direction de déchargement (51).

12. Système de localisation selon au moins une des revendications 1 à 11, **caractérisé en ce que** l'orientation du dispositif de localisation (3, 28, 50), en particulier l'angle de réglage vertical (a, d), par rapport à la machine de travail (1, 30, 37), sont utilisés pour la coordination automatique d'un véhicule de travail (36).

13. Système de localisation selon au moins une des revendications 1 à 12, **caractérisé en ce que** le dispositif de localisation (3, 7, 28, 50) est équipé d'une antenne de navigation (5).

14. Système de localisation selon au moins une des revendications 1 à 13, **caractérisé en ce que** la position de la grandeur de guidage (14, 34, 54, 55) par rapport au dispositif de localisation (3, 7, 28, 50) détectée par le dispositif de localisation (3, 7, 28, 50) et l'orientation du dispositif de localisation (3, 7, 28, 50) par rapport à la machine de travail (1, 30, 37) sont utilisées, conjointement avec la position du dispositif de localisation (3, 7, 28, 50) déterminée par l'antenne de navigation (5), dans au moins un dispositif de planification (40) et/ou de commande (46, 47) le long d'un itinéraire (41) pour la machine de travail (1, 30, 37) et/ou pour un véhicule de travail (36).

15. Système de localisation selon au moins une des revendications 1 à 14, **caractérisé en ce que** l'orientation de référence de la zone de couverture (13, 58) du dispositif de localisation (3, 28, 50) est prédéfinie en fonction d'au moins un réglage de la machine de travail (1, 30, 37).

16. Système de localisation selon au moins une des revendications 1 à 15, **caractérisé en ce que** la zone de couverture (13, 58) du dispositif de localisation (3, 28, 50) peut être adaptée à la grandeur de guidage (14, 34, 54, 55) à localiser, conjointement avec celle-ci.
